# EUROPEAN PATENT SPECIFICATION

(11) **EP 1 490 741 B1**
(45) Date of publication and mention of the grant of the patent: **17.05.2006**
(21) Application number: 03743907.2
(22) Date of filing: 13.03.2003
(51) Int. Cl.: G05B 23/02, G07C 3/00

(54) **CONDITION MONITORING SYSTEM FOR MACHINES EQUIPPED WITH A MACHINE CONTROL SYSTEM AND INCLUDING ROTATING MACHINE ELEMENTS**
ZUSTANDSÜBERWACHUNGSSYSTEM FÜR MASCHINEN, DIE MIT EINEM MASCHINENSTEUERSYSTEM AUSGESTATTET SIND UND DIE ROTIERENDE MASCHINENELEMENTE ENTHALTEN
SYSTEME DE CONTROLE D'ETAT POUR MACHINES EQUIPEES D'UN SYSTEME DE COMMANDE DE MACHINE ET COMPRENANT DES ELEMENTS DE MACHINE ROTATIFS

(30) Priority: 14.03.2002 FI 20025009
(43) Date of publication of application: 29.12.2004
(73) Proprietor: Metso Automation Oy, 00880 Helsinki (FI)
(72) Inventor: KAUPPILA, Jarmo, FIN-87200 Kajaani (FI); MUSTONEN, Harri, FIN-40520 Jyväskylä (FI)
(74) Representative: TBK-Patent
(86) International application number: PCT/FI2003/000192
(87) International publication number: WO 2003/077048

(56) References cited:
- EP-A- 0 822 473
- WO-A1-01/65228
- US-A- 5 953 227
- US-A- 6 078 874
- US-B1- 6 208 953

## Description

This invention relates to a condition monitoring system for machines equipped with a machine control system and including rotating machine elements, which condition monitoring system is based on the measurement and monitoring of various variables during the operation of machines and including
- one or more pieces of communication equipment,
- sensing elements arranged in connection with the machine to be monitored for the measurement of desired variables,
- processing equipment for the measuring data collected with the sensing elements, and
- storing and analyzing equipment for the result data formed by the processing equipment based on the measuring data, for the purpose of creating and storing the condition information of the machine.

Generally condition monitoring is used in particular in connection with large and substantially continuously operating machines. Preventive and continuous condition monitoring is reasonable, because in unexpected disturbances repair action and costs of repair are enormous, and losses due to repair shutdowns are remarkable, especially in production machines. Such machines include for example paper machines and power plants, in particular wind power plants.

Paper machines have several large rotating machine elements such as rolls, gears and electric motors. Thus one single paper machine includes as many as hundreds, even thousands of various measurable variables, based on which the condition of each machine is determined in a certain situation. Therefore specific systems have been developed for condition monitoring, permitting to determine the machine condition with a sufficient accuracy, but in a centralized manner. In wind power plants, the need for condition monitoring is further increased especially due to their location and design. Generally wind power plants are high constructions, located at a distance from human settlement or transport connections. In addition, the wind power plants include large gears and generators. In such conditions preventive condition monitoring is especially important.

In known systems, various sensing elements, most commonly acceleration transducers, are installed in the desired positions. Other variables, such as pressure, temperature and speed are also measured. Several sensing elements continuously provide a large amount of measuring data the processing of which would be laborious and even impossible in practice. Therefore the sensing elements of one gear, for example, are incorporated in one single processing device, which preprocesses the measuring data. This reduces the amount of result data to be transferred further. After this the result data preprocessed by various processing devices is transferred to centralized analyzing and storing devices, in which the current condition information of the machine concerned is formed based on the result data. The condition history data collected during the operation can also be utilized in the condition monitoring and failure prediction of the machines. One such system is proposed in the Finnish patent No. 107408.

Despite the preprocessing of the measuring data, the amount of data to be transferred is enormous. Due to this condition monitoring systems become heavy, and the communication equipment, in particular, must be dimensioned for the greatest amount of data at each point. In practice this means high-speed information networks, routers and other data transfer equipment. In addition, the condition monitoring system of each machine must be separately designed and assembled as well as customized for various users. This makes the implementation of condition monitoring a large and expensive project, which is economically viable only if the object of monitoring is a unit consisting of several machines, such as a paper machine. Despite this, the condition information of the machine can be restrictedly utilized only with the equipment designed for that purpose. Due to the high cost of the condition monitoring system, attention is generally fixed to the most critical machines, in which case part of the machines remains without condition monitoring, or it covers only a part. This reduces the reliability of the entire machine.

Document WO 01/65228 A1 describes a monitoring system and its use, in particular the use of an on-line condition monitoring system for the real-time observation of a number of monitored objects. The system comprises a sensor arranged at each monitored object in order to generate signals, which represent the condition of this object, a substation, which is arranged to receive signals from the object at certain measurement intervals and to transmit the so obtained data generated by the measurements to a monitoring unit which has a processing unit and one or more workstations, at which the condition of different objects can be observed, and a data network. The substation is further arranged to receive signals during a longer period from an object, which has been put into particular real-time observation. The substation and/or the work-station is arranged to process the signals received by the substation and to generate calculation results, which are presented to the operator. The workstation is arranged by means of real-time signal analysis user interface software to visualise to the operator the measured signals and the results calculated from them.

Document EP-A-0 822 473 describes a remote maintenance system. Factories have host computers for monitoring industrial equipments. Each host computer is connected to a management host computer on a vendor side through the internet. The host computer on the factory side detects occurrence of a trouble of the industrial equipment and notifies the vendor side of status information representing a trouble state. In response to this, the host computer on the vendor side notifies the factory side of response information representing a countermeasure against the trouble state.

It is an object of the invention is to provide a new type of condition monitoring system, which is economically viable even for one single machine, for machines equipped with a machine control system and including rotating machine elements.

This object is achieved by the measures defined in the independent claims. In detail, this object is achieved by a condition monitoring system according to claim 1 and a module according to claim 9 which is to be used in a such a condition monitoring system.

According to one aspect of the present invention, there is provided a condition monitoring system in which the condition information of a machine is locally specified, which remarkably simplifies the design of the entire condition monitoring system compared to known techniques. In addition, the components of the condition monitoring system are selected in such a manner that the same parts of the whole can be utilized with machines that may differ greatly from each other. Also, changing or adding components is easy to do afterwards. In addition, the implementation and maintenance of the condition monitoring system is easier than before. Further, the condition information of a machine created by the condition monitoring system is utilizable in a more versatile manner compared to the past.

The invention is described below in detail by making reference to enclosed drawings, which illustrate some of the embodiments of the invention, in which
- Figure 1: shows a principal drawing of two condition monitoring systems according to the invention,
- Figure 2: shows the condition monitoring systems of Figure 1 as practical applications,
- Figure 3: shows the modifications of the embodiments of Figure 3,
- Figure 4: shows a principal drawing of the core components of the condition monitoring system according to the invention.

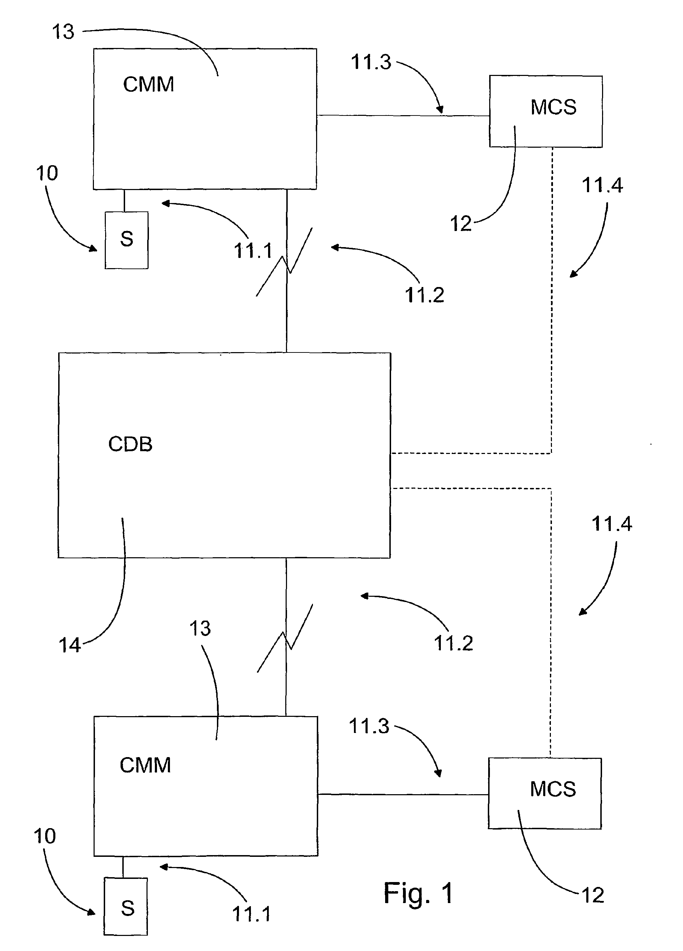

Figure 1 shows a principal drawing of only two condition monitoring systems according to the invention, which systems are here identical. Each condition monitoring system, later in the description referred to with the term 'system' for simplification, is designed for machines equipped with a machine control system and including rotating machine elements. Such machines are for example paper machine rolls and their machine elements: bearings, gears and electric motors. Similar machine elements are found for example in a turbine of a power plant and a gear of a wind power plant. A certain level of vibration is typical for rotating machine elements during the operation. Therefore, a great part of condition monitoring consists of measurement of various vibrations in particular. However, also other variables are measured, such as temperature, pressure and speed of rotation, since they affect the operating conditions.

The condition information of the machine is formed with suitable equipment based on the measuring data. History data, created by continuously storing the condition information of the machine for the operating time, is often used for assistance. For example, condition monitoring of a wind power plant gear consists of measuring vibrations at selected points. These include vibrations of the shaft, gear and bearings, for instance. The measuring frequencies at various points normally differ from each other and vary from application to application. Intensified vibration is normally a sign of a disturbance. However, due to complicated machines and several machine elements, a direct verification and localization of a disturbance is in many cases difficult. Due to this, various signal processing operations are usually applied in the measurements to facilitate the characterization of, for example, the intensity of vibration and the frequency components appearing in the signal. The current condition information is obtained by comparing the data obtained to known values, alarm or warning limits, the data describing the operating condition of a machine or a process, initial situation and often also to history data. The processing and analyzing of measuring data described above is as such a well-known procedure.

Instead, the system according to the invention is new and surprising compared to known techniques. Referring to Figure 1, the system includes sensing elements S (Sensor) 10 arranged in connection with the machine to be monitored for measuring the desired variables. The machines to be monitored are not presented here. In practice, sensing elements are various sensors, which are attached at suitable points in the machine to be monitored. In addition, the system includes processing equipment for the measuring data collected with the sensing elements, and storing and analyzing equipment for the result data created by the processing equipment based on the measuring data, for the purpose of forming and storing the condition information of the machine. The design and operation of the processing equipment as well as those of the storing and analyzing equipment are discussed later in more detail. In addition, the elements and equipment described above are connected to each other with suitable communication equipment. Same reference numbers are used for functionally similar parts.

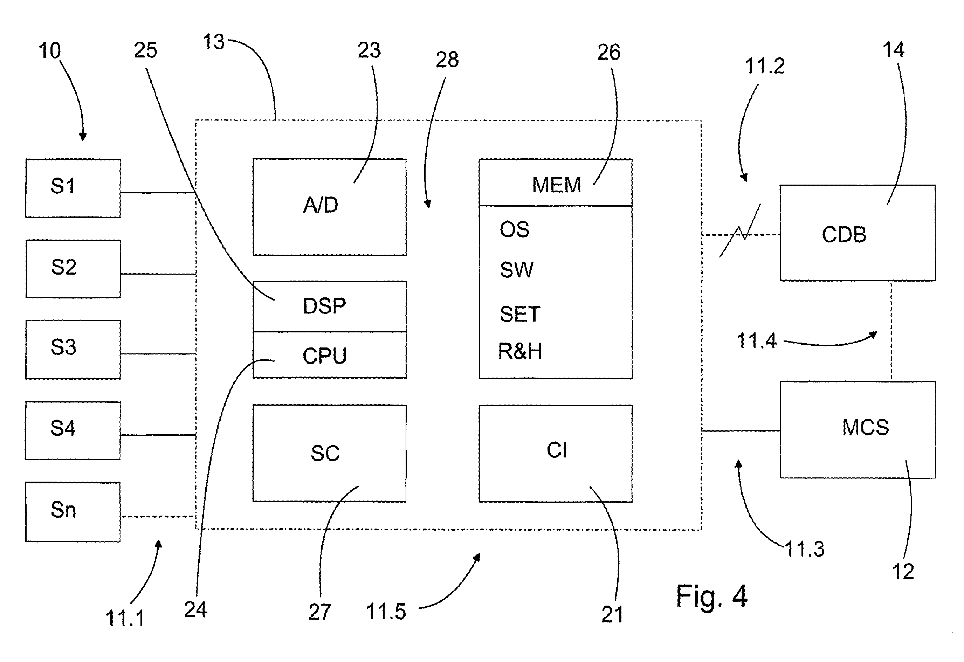

According to the invention, the storing and analyzing equipment is separately arranged in connection with each machine as a Condition Monitoring Module CMM 13 that is separate from the Machine Control System MCS 12. This makes it possible to specify the condition information of the machine irrespective of the other equipment. Also, the implementation and the use of the system are then easier than before. At the same time, heavy information networks and specific server computers can be avoided. In practice a condition monitoring module, or simpler - a module - is arranged as an integrated unit and its construction is independent of the machine design. This makes it possible to use one module type for different machines and machine elements. To enable this, the module has a certain type of basic design, which is described in more detail later with reference to Figure 4.

For the use of a universal module, the system additionally includes a CDB (Configuration DataBase) 14. The design and configuration information of each machine as well as the desired analyzing software are transferred from the configuration database 14 to the module 13 using the communication equipment 11.2. Thus the basic data related to for example the design and application of each machine to be monitored and to the number and position of sensing elements can be transferred to a module which has as such a universal design. The basic data is normally transferred already at the production stage of the machine, which remarkably reduces the installation time in the actual application place. Then, for performing the data transfer, it is required to use the communication equipment, which is normally disabled. If the condition monitoring alarm and warning limits typical of the machine to be monitored are known in advance, they can be stored in the module's memory together with the other configuration data already in the production stage of the device. This speeds up and simplifies the implementation of condition monitoring in a remarkable way, as a separate alarm limit set-up and a history data collection typically related thereto are then unnecessary. The design and configuration data can also be transferred in a later stage, for example when there are changes in the design and/or configuration data and/or analyzing software. The data can then be updated without physical access to the module. Updating can be performed using the above mentioned communication equipment. Alternatively, the data can be updated using the machine control system 12 in-between, which also can communicate with the configuration database 14 as shown in Figure 1. The communication equipment 11.4 between the configuration database 14 and the machine control system 12 is illustrated with a dashed line. The third set of communication equipment 11.3 is placed between the module 13 and the machine control system 12. The current condition information is transmitted along this connection to the machine control system 12.

In practice, the configuration database is adapted to a specific server computer, in which the basic data of e.g. various sensors, machines, machine elements, and of course modules is stored. The basic data can be transmitted from one configuration database to several systems according to the invention as shown in Figures 1 - 3. The server computer normally contains the required analyzing software for the machine to be monitored. In that case the settings and software can be easily selected according to the system configuration and desired properties, and then be transferred to the module. For normal operation, the condition monitoring system does not require a connection to the server computer, because the server computer is needed only for updating the configuration data. For this purpose, the connection can be temporarily created via information networks, a modem or some other data transfer channel. In this way changes in the configuration data can be implemented by means of a remote connection, accessing for example from the machine manufacturer's service center. This being the case, the system itself does not require incorporating a server computer for the configuration database.

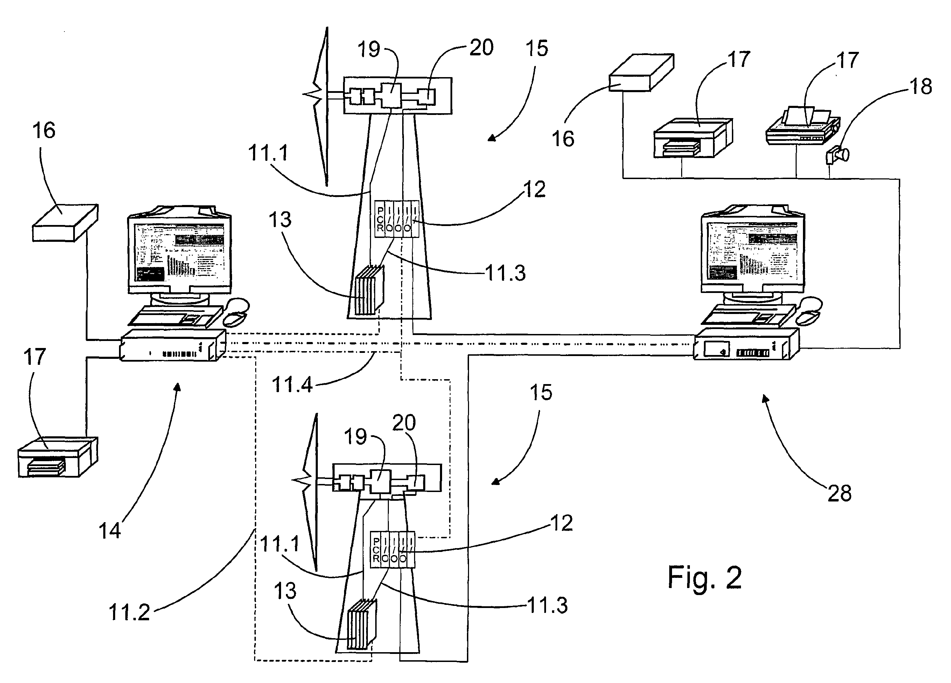

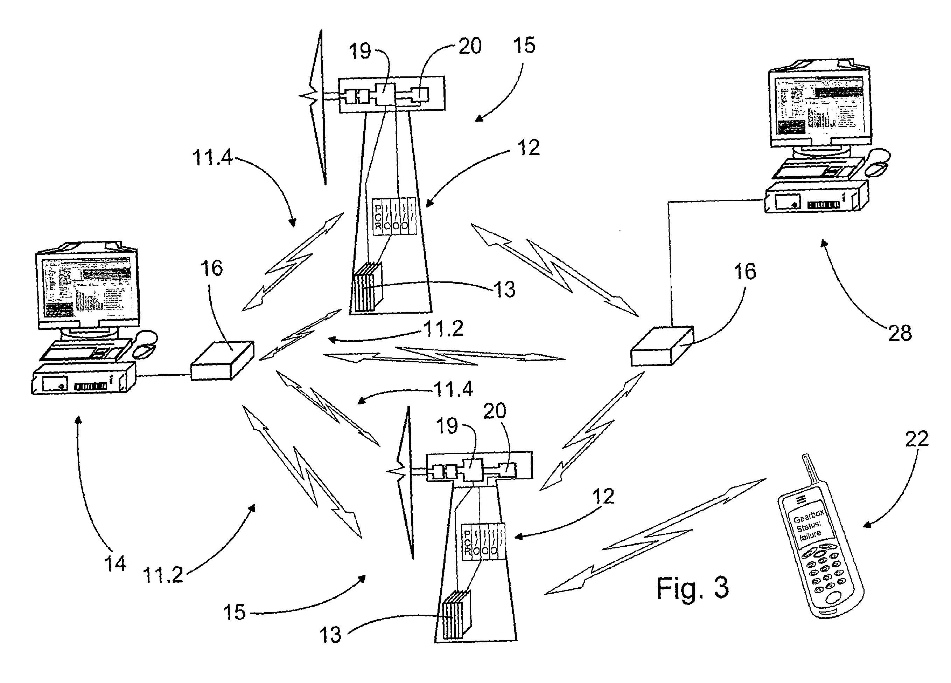

Figures 2 and 3 show the practical design of the system according to the invention. In this example the system is adapted for use in connection with wind power plants 15. However, it could as well be applied for a paper machine or a power plant. Each wind power plant 15 typically has an own independent machine control system 12. A local machine control system takes care of the control of the wind power plant, and in practice this can be a programmable controller, for example. The measurements required by the controller are transmitted to the machine control system, which correspondingly provides the required control signals for the actuators.

A wind power park including several wind power plants also often has a specific control room (Figures 2 and 3). Usually the control room houses a control room computer 28, which is connected to a machine control system 12 installed in each wind power plant 15. The main function of this control room computer is to provide a user interface for the wind power park control system; that is, for all local machine control systems in various wind power plants. The control room computer may also contain for example applications for the collection of history data.

In the embodiment according to the invention the modules 13 are located in each wind power plant 15 and connected to the machine control system 12 installed in the respective wind power plant 15. In practice, it is advisable to connect the local wind power plant units to each other as in Figure 2, in which case the connection between the control room computer and the local modules in the wind power plants becomes unnecessary. Such a connection can be made, if necessary; however, it is more economical to perform the data transfer between the control room computer and the modules, such as the display of condition monitoring information in the control system user interface, by taking the information from the module to the control room computer via the local machine control system. In this case it is possible to utilize the existing connection between the local machine control system in the wind power plant and the control room computer.

The configuration database 14 shown in Figures 2 and 3 and the related computer are not needed at all as part of the system during the normal operation of the wind power plant. The settings are loaded in the modules at the startup stage, after which the configuration database and the related server are needed only for changing the settings or upgrading the software. For these operations, the server computer can be specially brought on site for updating, or updating can be performed via a remote connection either connecting directly to the modules or via the control room computer. In Figure 2, the control room computer 28 has additionally a modem 16, a printer 17, and an alarm device 18 connected thereto as peripheral devices.

Each wind power plant 15 has a gear 19 and as its extension, a generator 20 producing electricity. Generation of electricity is controlled by the machine control system 12, which is placed in each wind power plant according to as previously set forth. The module 13 according to the invention is arranged in connection with each machine to be monitored, in this case thus in both wind power plants 15. According to the invention, the module stores and analyzes the measuring data from the sensing elements connected thereto providing condition information. Thus the data transfer between the module and the machine control system is reduced. At its simplest, the information is transferred only in disturbance situations in the form of an alarm signal. In the embodiment presented, the module is connected both to the gear and generator. In other words, the module monitors the condition of the entire wind power plant.

For determining the condition information, various environmental variables affecting the operating conditions of the machine are also utilized. Such environmental variables include for example force and direction of wind, outdoor temperature and humidity as well as other changing variables, such as generator power and speed of rotation. The sensors of these environmental variables can be directly connected to the module. On the other hand, in most machine control systems these sensors are incorporated, in which case, according to the invention, the data is entered from the machine control system to the module. It is partly for this reason, too, that the communication equipment 11.5 includes one or more communication interfaces CI 21, of which at least one is bi-directional (Figure 4). In that case it is easy to enter information and settings into the module after the installation and during the machine operation.

Figure 3 shows a modification of the embodiment set forth above, which uses wireless communication equipment. According to the invention a connection to the module can be made using various devices that resemble a machine control system. Also presented here is a terminal 22, which communicates with the module 13. In its simplest arrangement the module transmits a message of a disturbance to the terminal. The module can also be programmed to receive commands in a specified form to be transmitted with the terminal. Based on these commands, a result according to the command, such as condition information, is sent to the terminal. Generally the condition information is specified expressly in the module irrespective of the machine control system or other systems. According to the above, however, general information on the machine control system and history data of other identical machines, for example, can be entered into the module.

Figure 4 also shows a principle drawing of a system according to the invention with a focus on the design of the module 13. The module 13 itself is a rectangular drawn with a broken dotted line, within which the required elements are placed. Sensing elements 10 to be arranged in the machine to be monitored are shown in the left section of Figure 4. The type and number of the sensing elements varies between different embodiments. According to the invention, the configuration data of the module contains the sensing element information, which can be updated, if necessary, according as the configuration changes. The communication equipment 11.1 between the sensing elements 10 and the module 13 is normally fixed; however, wireless communication equipment can also be used. This is shown in Figure 4 with a broken line connecting the sensing elements Sn to the module 13.

The module is to a great extent an electronic programmable device. In practice, the measuring data arriving from the sensing elements 10 is led to the module 13 via an A/D converter 23. In the A/D converter 23 analog measuring data is converted to digital form. Part of the sensing elements may themselves include a similar converter, which helps the operation of the module, as the measuring information can then be directly brought to the module via the digital communication interface, and no components related to analog signal conditioning or A/D conversion are required for the sensor in question. According to the invention, the storing and analyzing equipment 28 also includes an analyzing processor CPU (Central Processing Unit) 24, which is used to actually process the measuring data. To facilitate the operation of the analyzing processor 24 the module 13 also contains processing equipment for the measuring data DSP (Digital Signal Prosessing) 25, which is used to process the measuring data in a desired way. Typical digital signal processing operations include for example linear or nonlinear scaling, digital filtering and FFT (Fast Fourier Transform). In advanced sensing elements such processing equipment is incorporated, which further simplifies the module design. The analyzing processor and the processing equipment can be integrated or separate components. Thus in practice, the A/D converter and the processing equipment can both be included either in the module or in the sensing element, or the A/D converter in the sensing element and the processing equipment in the module.

To enable the operation of the analyzing processor 24, the module 13 also includes read-alter memory and storing memory equipment MEM (Memory) 26. The read-alter memory equipment is for the operating system OS and the analyzing software SW (SoftWare). Analogously, the storing memory equipment is for the configuration data SET (Settings) and the result data R&H (Results & History). In other words, based on the software and settings stored in the module memory, the analyzing processor uses the measured data to create the condition information, which is stored in the module memory. Again based on the settings, the condition information is sent further most commonly to the machine control system. In that case the module according to the invention replaces earlier heavy condition monitoring systems.

To enable its general operation the module 13 also includes general electronics SC (Signal Conditioning) 27, consisting of e.g. required connectors, power supply for the sensing elements, galvanic separation, analog filtering, and electrical signal adaptation for the A/D converter (not shown). These components can be totally or partly integrated as a standard part of the module or, if required, implemented using discrete components to be connected to the module. The module 13 further includes the above mentioned communication interfaces 21, which should be made as universal as possible in order to provide a system that is independent of machine control systems. Such, almost standard communication interfaces include for example a radio transmitter/receiver and a GSM or other modem. Serial and parallel ports, Ethernet and other network connections, even relay outputs, are also possible. In practical applications there are several different communication interfaces and data transfer protocols programmed for them, and the one most suitable in the current situation is used. As the condition information of the machine is being defined, the amount of data to be transferred in the module itself is usually small and in any case notably smaller than in known techniques.

Thus the module to be used in the system according to the invention includes communication equipment for the sensing elements and the machine control system arranged in connection with the machine to be monitored. In addition, the communication equipment, the processing equipment and the storing and analyzing equipment are arranged in one module, which is to be adapted to the machine and has a design independent of the machine design. This makes it possible to use one module type with different machines. The operating system of the module is often standard in practice. The analyzing software is also standard for the main features, although differences between various applications may exist. The settings, instead, always conform to the machine to be monitored, so they vary between different applications.

A system according to the invention is economically viable even for individual machines. In addition, the system can be used to monitor a machine consisting of several different machine elements. Further, the system applies a specific module with a design independent of the machine design, which further reduces costs. In fact the module contains analyzing and memory capacity, which makes it possible to define the condition information in a centralized manner within the module itself. At the same time the module software can be set up for operation and, if necessary, also upgraded later. Connecting various sensing elements is also easy, the module thus being applicable for very different machines as well. Further, the module contains various communication interfaces, which are used to transfer data to and from the module. Thanks to standard communication interfaces the module is also independent of machine control systems, the implementation of the system thus being simple. Yet another advantage is that currently desired information can be transferred from the module to various systems and devices.

## Claims

1. A condition monitoring system for machines equipped with a machine control system (12) and including rotating machine elements, which condition monitoring system is based on the measurement and monitoring of various variables during the operation of the machines and including
- one or more pieces of communication equipment (11.1-11.5),
- sensing elements (10) arranged in connection with the machine to be monitored for measuring desired variables,
- processing equipment (25) for the measuring data collected with the sensing elements (10), and
- storing and analyzing equipment (28) for the result data formed by the processing equipment (23, 25) based on the measuring data, for the purpose of creating and storing the condition information of the machine,
**characterized in that** the condition monitoring system includes modules (13), including the storing and analyzing equipment (28), arranged closely in connection with each machine separately, and which module (13) is arranged separate from the machine control system (12), and which module (13) is arranged for creating and storing the condition information of the machine.

2. A condition monitoring system according to claim 1, **characterized in that** the processing equipment (23, 25) is at least partly arranged in connection with the module (13) and/or the sensing elements (10).

3. A condition monitoring system according to claim 1 or 2, **characterized in that** the module (13) has an integrated arrangement and its design is independent of the machine design.

4. A condition monitoring system according to any of claims 1 - 3, **characterized in that** for connecting the machine control system (12) to the condition monitoring system the communication equipment (11.5) includes one or more communication interfaces (21), of which at least one is bi-directional.

5. A condition monitoring system according to any of claims 1 - 4, **characterized in that** the condition monitoring system includes a configuration database (14), from which the design and configuration data of each machine as well as the desired analyzing software are transferred to the storing and analyzing equipment (28) using the communication equipment (11.2, 11.3, 11.4).

6. A condition monitoring system according to claim 5, **characterized in that** the design and configuration data is transferred at the production or startup stage of each machine or later as changes take place in the design and/or configuration data and/or analyzing software.

7. A condition monitoring system according to any of claims 1 - 6, **characterized in that** the storing and analyzing equipment (28) includes an analyzing processor (24) as well as read-alter memory and storing memory equipment (26), of which the read-alter memory equipment is for the operating system and the analyzing software, and the storing memory equipment is for the configuration and result data.

8. A condition monitoring system according to claim 7, **characterized in that** the configuration data and/or analyzing software are adapted for each machine.

9. A module (13) to be used in a condition monitoring system according to any of claims 1 - 8 including communication equipment (11.1, 11.3) for the sensing elements (10) and in which condition monitoring system the machine control system (12) is arranged in connection with the machine to be monitored, **characterized in that** the communication equipment (11.1, 11.3), processing equipment (25) and storing and analyzing equipment (28) are arranged in one unit to be adapted to the machine, independent of the machine design.

10. A module according to claim 9, **characterized in that** the communication equipment (11.1) between the sensing elements (10) and the module (13) is fixed and/or wireless.

## Patentansprüche

1. Ein für Maschinen, die mit einem Maschinensteuersystem (12) ausgestattet sind und rotierende Maschinenelemente enthalten, bestimmtes Zustandsüberwachungssystem, das auf Messen und Monitoring verschiedener Größen während des Betriebs der Maschinen basiert und das
- ein oder mehrere Verbindungsmittel (11.1-11.5),
- in Verbindung mit der zu überwachenden Maschine angeordnete Messfühler (10) zum Messen der gewünschten Größen,
- Aufbereitungseinrichtungen (25) für die von den Messfühlern (10) gelieferten Messdaten, und
- zur Bildung und zum Speichern der Zustandsinformation dienende Speicher- und Analyseeinrichtungen (28) für die von den Aufbereitungseinrichtungen (23, 25) aus den Messdaten gewonnenen Ergebnisdaten umfasst,
**dadurch gekennzeichnet, dass** das Zustandsüberwachungssystem mit Modulen (13) ausgestattet ist, die getrennt für jede Maschine in enger Verbindung mit dieser befindliche Speicher- und Analyseeinrichtungen (28) haben, wobei der jeweilige Modul (13) getrennt vom Maschinensteuersystem (12) angeordnet und zum Erzeugen und Speichern der Maschinenzustandsinformation eingerichtet ist.

2. Zustandsüberwachungssystem nach Anspruch 1, **dadurch gekennzeichnet, dass** die Aufbereitungseinrichtungen (23, 25) zumindest teilweise in Verbindung mit dem Modul (13) und/oder den Messfühlern (10) angeordnet sind.

3. Zustandsüberwachungssystem nach Anspruch 1 oder 2, **dadurch gekennzeichnet, dass** der Modul (13) als einheitliche, d.h. integrierte Anordnung konzipiert und sein Aufbau von der Konstruktion der Maschine unabhängig ist.

4. Zustandsüberwachungssystem nach irgendeinem der Ansprüche 1 bis 3, **dadurch gekennzeichnet, dass** zum Anschließen des Maschinensteuersystems (12) an das Zustandsüberwachungssystem zu den Verbindungsmitteln (11.5) eine oder mehrere Datenübertragungsschnittstellen (21) gehören, von denen wenigstens eine bidirektional ist.

5. Zustandsüberwachungssystem nach irgendeinem der Ansprüche 1 bis 4, **dadurch gekennzeichnet, dass** das Zustandsüberwachungssystem eine Konfigurationsdatenbank (14) enthält, aus der die Konstruktions- und Einstelldaten der jeweiligen Maschine und die gewünschte Analysesoftware mit Hilfe der Verbindungsmittel (11.2, 11.3, 11.4) in die Speicher- und Analyseeinrichtungen (28) übertragen werden.

6. Zustandsüberwachungssystem nach Anspruch 5, **dadurch gekennzeichnet, dass** das Übertragen der Konstruktions- und Einstelldaten in der Herstellungs- oder der Inbetriebstellungsphase der jeweiligen Maschine oder später bei Veränderung der Konstruktions- und/oder Einstelldaten und/oder der Analysesoftware erfolgt.

7. Zustandsüberwachungssystem nach irgendeinem der Ansprüche 1 bis 6, **dadurch gekennzeichnet, dass** die Speicher- und Analyseeinrichtungen (28) einen Analyseprozessor (24) sowie Read-alter-memory- als auch Storing-memory-Einrichtungen (26) umfassen, wobei die Read-alter-memory-Einrichtungen für das Betriebssystem und die Analysesoftware und die Storing-memory-Einrichtungen für die Einstell- und Ergebnisdaten vorhanden sind.

8. Zustandsüberwachungssystem nach Anspruch 7, **dadurch gekennzeichnet, dass** die Einstelldaten und/oder die Analysesoftware der jeweiligen Maschine angepasst sind.

9. In einem Zustandsüberwachungssystem nach irgendeinem der Ansprüche 1 bis 8 einzusetzender Modul (13), der Verbindungsmittel (11.1, 11.3) für die Messfühler (10) umfasst, wobei in dem Zustandsüberwachungssystem das Maschinensteuersystem (12) in Verbindung mit der zu überwachenden Maschine angeordnet ist, **dadurch gekennzeichnet, dass** die Verbindungsmittel (11.1, 11.3), die Aufbereitungseinrichtungen (25) sowie die Speicher- und Analyseeinrichtungen (28) zu einer einzigen, in Verbindung mit der Maschine anzuordnenden, von der Konstruktion der Maschine unabhängigen Einheit zusammengefasst sind.

10. Modul nach Anspruch 9, **dadurch gekennzeichnet, dass** es sich bei den Verbindungsmitteln (11.1) zwischen den Messfühlern (10) und dem Modul (13) um feste und/oder drahtlose Verbindungsmittel handelt.

## Revendications

1. Système de contrôle d'état pour machines équipées d'un système de commande de machine (12) et comprenant des éléments de machine rotatifs, lequel système de contrôle d'état est basé sur la mesure et la surveillance de diverses variables pendant le fonctionnement des machines, et qui inclut
- un ou plusieurs dispositifs de communication (11.1.-11.5),
- des capteurs (10) disposés en liaison avec la machine à surveiller pour mesurer les variables désirées,
- un équipement de traitement (25) pour les données de mesure collectées par les capteurs (10), et
- un équipement de stockage et d'analyse (28) pour les données de résultat produites par le dispositif de traitement (23, 25) basé sur les données de mesure, afin de créer et de stocker les informations sur l'état de la machine,
**caractérisé par le fait que** le système de contrôle d'état inclut des modules (13) comprenant le dispositif de stockage et d'analyse (28) disposés en liaison étroite avec chaque machine séparément, que les modules (13) sont installés séparément du système de commande de machine (12), et que les modules (13) sont prévus pour créer et stocker l'information sur l'état de la machine.

2. Système de contrôle d'état selon la revendication 1, **caractérisé par le fait que** le dispositif de traitement (23, 25) est au moins partiellement relié au module (13) et/ou aux capteurs (10).

3. Système de contrôle d'état selon la revendication 1 ou 2, **caractérisé par le fait que** le module (13) est conçu de façon intégrée et que sa structure est indépendante de la structure de la machine.

4. Système de contrôle d'état selon l'une quelconque des revendications 1 - 3, **caractérisé par le fait que** pour relier le système de commande de machine (12) au système de contrôle d'état, le dispositif de communication (11.5) inclut une ou plusieurs interfaces de communication (21), dont l'une au moins est bidirectionnelle.

5. Système de contrôle d'état selon l'une quelconque des revendications 1 - 4, **caractérisé par le fait que** le système de contrôle d'état inclut une base de données de configuration (14), à partir de laquelle les données de conception et de configuration de chaque machine ainsi que le logiciel d'analyse désiré sont transférées au dispositif de stockage et d'analyse (28) par le biais des dispositifs de communication (11.2, 11.3, 11.4).

6. Système de contrôle d'état selon la revendication 5, **caractérisé par le fait que** les données de conception et de configuration sont transférées lors de l'étape de fabrication ou de mise en service de chaque machine ou ultérieurement lorsque des changements interviennent dans les données de conception et/ou de configuration et/ou dans le logiciel d'analyse.

7. Système de contrôle d'état selon l'une quelconque des revendications 1 - 6, **caractérisé par le fait que** le dispositif de stockage et d'analyse (28) inclut un processeur d'analyse (24) ainsi qu'un équipement de mémoire RAM et de mémoire de stockage (26), lequel équipement de mémoire RAM est destiné au logiciel d'exploitation et au logiciel d'analyse, le dispositif de mémoire de stockage étant destiné aux données de configuration et de résultat.

8. Système de contrôle d'état selon la revendication 7, **caractérisé par le fait que** les données de configuration et/ou le logiciel d'analyse sont adaptés spécifiquement pour chaque machine.

9. Module (13) destiné à être utilisé dans un système de contrôle d'état selon l'une quelconque des revendications 1 - 8 comprenant des dispositifs de communication (11.1, 11.3) pour les capteurs (10), dans lequel système de contrôle d'état le système de commande de machine (12) est disposé en liaison avec la machine à surveiller, **caractérisé par le fait que** les dispositifs de communication (11.1, 11.3), de traitement (25) et de stockage et d'analyse (28) sont disposés dans une seule structure à adapter à la machine et indépendante de la structure de ladite machine.

10. Module selon la revendication 9, **caractérisé par le fait que** les dispositifs de communication (11.1) entre les capteurs (10) et le module (13) sont fixes et/ou sans fil.
